# DEMANDE DE BREVET EUROPEEN

(11) **EP 3 431 443 A1**
(43) Date de publication de la demande: **23.01.2019**
(21) Numéro de dépôt: 17305974.2
(22) Date de dépôt: 21.07.2017
(51) Int. Cl.: C02F 1/40, C02F 1/72, B01D 17/02, B01D 17/04, C02F 1/32, C02F 1/34, C02F 1/38, C02F 1/44, C02F 1/467, C02F 1/66, C02F 1/78, C02F 101/30, C02F 101/32

(54) **PROCEDE ET DISPOSITIF DE TRAITEMENT D'UNE COMPOSITION FLUIDE AQUEUSE COMPRENANT AU MOINS UN POLYMERE ET DE L'HUILE**

(71) Demandeur: SUEZ Groupe, 92040 Paris la Défense Cedex (FR)
(72) Inventeur: SAGNE, Camille, 92130 ISSY LES MOULINEAUX (FR); SUTTON-SHARP, Emilie, 75018 PARIS (FR)
(74) Mandataire: Esselin, Sophie

(57) **Abrégé**

L'invention concerne un procédé de traitement d'un effluent aqueux comprenant au moins un polymère et de l'huile, comprenant les étapes suivantes :
- une étape de déshuilage (210) de l'effluent aqueux et
- une étape de déviscosification (310), réalisée à l'issue de l'étape de déshuilage.

L'invention concerne également dispositif de traitement d'un effluent aqueux comprenant au moins un polymère et de l'huile, comprenant :
- des moyens de déshuilage et
- des moyens de déviscosification disposés en aval des moyens de déshuilage.

## Description

### DOMAINE TECHNIQUE DE L'INVENTION

La présente invention concerne un procédé de traitement d'une composition fluide aqueuse comprenant au moins un polymère et de l'huile. La composition aqueuse est en général un effluent aqueux provenant de la récupération assistée d'hydrocarbures.

Elle concerne également un dispositif de traitement d'une composition fluide aqueuse comprenant au moins un polymère et de l'huile.

### ETAT DE LA TECHNIQUE

Dans le domaine de la production d'hydrocarbures, il est connu d'utiliser un procédé de production d'hydrocarbures dit de récupération assistée d'hydrocarbures dans un réservoir. Ce procédé consiste en l'injection d'un fluide aqueux, en général de l'eau ou une saumure, dans le réservoir. Le fluide aqueux balaye la formation souterraine pour forcer les hydrocarbures à sortir des pores de la roche où ils se trouvent absorbés. Ce fluide est appelé fluide de balayage.

Ce procédé est connu sous le nom de Enhanced Oil Recovery (EOR) et plus particulièrement en tant que :
- EOR à injection d'eau si l'on injecte seulement de l'eau dans le gisement d'hydrocarbures ;
- EOR à faible salinité lorsque de l'eau à faible salinité est injectée ;
- EOR vapeur lorsque de l'eau est injectée sous forme de vapeur pour chauffer les hydrocarbures, ce qui les fluidifie et améliore leur extraction ;
- EOR chimique (en anglais « Chemical Enhanced Oil Recovery » ou CEOR) lorsque des produits chimiques sont également injectés.

Ce procédé est notamment utilisé dans les gisements d'hydrocarbures parvenus à maturité, dans lesquels la pression du réservoir est réduite à tel point que les hydrocarbures ne peuvent pas être récupérés naturellement dans le réservoir. Le fluide de balayage injecté dans le réservoir permet par exemple de déplacer les hydrocarbures vers un puits de production et de maintenir la pression dans le réservoir.

On utilise en général de l'eau ou de la saumure comme, ou dans, le fluide de balayage car elles sont immiscibles aux hydrocarbures et les déplacent, ce qui permet de récupérer plus d'hydrocarbures dans le réservoir.

Dans la suite de la présente description, on utilisera le terme « eau » qui pourra aussi bien désigner : les eaux d'aquifères, les eaux de surface, l'eau de mer ou de l'eau produite recyclée ou des saumures ...

Dans une technique EOR chimique, on peut ajouter un ou plusieurs additifs suivants :
- un ou des polymères notamment hydrosolubles et de haut poids moléculaire qui, ajoutés à l'eau, augmentent sa viscosité ; cela permet de ralentir le flux d'eau et, par conséquent, d'améliorer l'efficacité du balayage d'eau entraînant une meilleure récupération du pétrole ;
- un ou des surfactants ou tensio-actifs qui diminuent la tension superficielle entre le pétrole et l'eau pour limiter l'adhérence des hydrocarbures au niveau des roches, mobilisant le pétrole et aidant la récupération du pétrole de la roche : les surfactants sont généralement de type sulfonates de pétroles ou alky-sulfonates synthétiques ;
- un ou des composés alcalins qui augmentent le pH, et par conséquent qui stabilisent plus les émulsions de pétrole : les composés alcalins sont généralement des composés minéraux comme le carbonate et le bicarbonate de sodium (Na₂CO₃ et NaHCO₃), l'hydroxyde de sodium (NaOH) ou les silicates de sodium (Na₂SiO₃).

Parmi les polymères d'origine synthétique, on peut citer les polymères ou copolymères à base d'acrylamide comme les polyacrylamides partiellement hydrolysés appelés HPAM, qui sont des copolymères d'acrylamide et d'acrylate de sel (type sodium), des copolymères d'acrylamide avec des monomères sulfonés tel que l'AMPS (2-acrylamido-2-méthylpropane sulfonate) ou des copolymères d'acrylamide avec des monomères de type PVP (poly-vinyl-pyrrolidone), les copolymères d'acrylamide et d'acrylique ou leurs mélanges.

Les polymères d'origine naturelle peuvent être choisis parmi le groupe constitué par les gommes guar, la cellulose et les dérivés cellulosiques tels que la carboxyméthylcellulose, l'hydroxyéthylcellulose, et carboxyéthylcellulose, l'amidon, les gommes de xanthanes, les galactomannanes ou leurs mélanges.

Les polymères peuvent être fonctionnalisés par des groupements sulfonates, carboxylates, amines, imines, ammonium, carboxamides, imides, hydroxyles, acétyles.

Lorsque les polymères sont utilisés en combinaison avec des composés alcalins, on parle de technique dite AP (Alcalin Polymer). Lorsqu'ils sont combinés avec des tensioactifs, on parle de technique dite SP (Surfactant Polymer). Lorsqu'ils sont combinés avec des composés alcalins et des tensioactifs, on parle de technique dite ASP (Alcalin, Surfactant Polymer).

Ainsi, le fluide aqueux de balayage peut comprendre des additifs tels que des polymères et/ou des surfactants ou tensioactifs et/ou des composés alcalins qui modifient les propriétés physico-chimiques de l'eau ou de la saumure : notamment sa viscosité pour les polymères et sa tension superficielle pour les autres additifs. Ces additifs améliorent l'efficacité du fluide de balayage et permettent d'augmenter le rendement de récupération des hydrocarbures contenus dans la formation souterraine.

L'effluent sous-produit du procédé de production d'hydrocarbures comprend le fluide de balayage aqueux, avec les additifs le cas échéant, ainsi que des huiles et des matières en suspension (MES) telles que des sables, des argiles, des sels inorganiques, des produits de corrosion, et généralement du dioxyde de carbone. Dans la présente description, on parlera d'« effluent de production » ou d'« effluent produit » ou d'« effluent aqueux de production ».

Les entreprises qui produisent ces fluides de production doivent les traiter pour les rejeter dans le milieu naturel et/ou les réutiliser dans le procédé de production d'hydrocarbures.

Les entreprises de pétrole et de gaz cherchent de plus en plus à réutiliser l'eau comprise dans l'effluent de production (on parlera d'« eau de production » ou « eau produite ») de manière à la réinjecter dans les gisements d'hydrocarbures pour les extraire. Cela leur permet de réduire leur empreinte environnementale ainsi que leurs coûts de gestion de l'eau. En effet, l'exploration et la production de pétrole et de gaz peuvent générer une grande quantité d'eau ou d'effluents aqueux : la moyenne mondiale est de trois barils d'eau pour chaque baril d'hydrocarbures produits et ce ratio augmente au cours de la durée de vie des puits producteurs.

Cette réutilisation de l'eau de production dans un nouveau cycle de production d'hydrocarbures nécessite un processus de traitement complet pour éviter de boucher le réservoir, le matériel d'injection du fluide de balayage ou tout autre circuit, composant ou contenant utilisé lors de la production avec les composés indésirables contenus dans l'eau produite, tels que les solides en suspension, l'huile, le tartre ...

En outre, lorsqu'il est nécessaire de réinjecter l'eau de production dans un réservoir souterrain pour extraire à nouveau des hydrocarbures, l'eau doit respecter des spécifications d'injection. Ces spécifications dépendent des caractéristiques du réservoir et des modes d'injection. Enfin, les entreprises de pétrole et de gaz cherchent de plus en plus à récupérer les huiles d'hydrocarbures contenues dans l'effluent de production pour les revaloriser.

Le problème est que, lorsque le fluide de balayage comprend un polymère, cela entraîne la production d'un effluent de production aqueux fortement visqueux, la plupart des polymères restant dans ledit effluent de production. Cela rend l'effluent beaucoup plus difficile à traiter que lorsque le fluide de balayage n'en contient pas.

En effet, la viscosité de l'eau, qui réduit par définition la différence de viscosité entre l'eau et les huiles réduit la performance des procédés de traitement d'eau de production utilisés classiquement, tels la flottation, la décantation, la séparation par gravité.

Les dispositifs de flottation sont couramment utilisés pour éliminer l'huile et les solides de l'eau produite. Lorsque l'eau à traiter est visqueuse, les procédés de flottation se complexifient avec une distribution non uniforme des bulles d'air qui habituellement favorisent la séparation.

Pour permettre une meilleure séparation huile-eau, une solution est de précipiter le polymère en injectant des produits chimiques de type coagulant à forte dose. Cette solution coûte cher et produit une boue coagulée comme sous-produit difficile à traiter. De ce fait, la déshydratation et le transport des boues coagulées génèrent des coûts d'exploitation élevés. De plus, l'huile dans les boues coagulées n'est pas récupérée, ce qui induit une perte de revenus pour l'entreprise de pétrole et de gaz.

Les temps de séjour nécessaire aux séparations gravitaires sont rendus beaucoup plus longs du faite de la forte viscosité de la phase aqueuse. Alternativement, il faut des volumes de cuves 2 à 5 fois plus grands.

Quant aux procédés par filtration, la viscosité de l'eau peut ralentir la filtration et les polymères peuvent colmater des filtres en profondeur (filtre à sable, filtre avec un ou plusieurs médias) et/ou des membranes par exemple par adsorption du polymère à la surface de la membrane et par blocage des pores des membranes, ce qui, dans le meilleur des cas multipliera les opérations de maintenance ou de remplacement de ces filtres ou membranes.

Le fait de rajouter un surfactant et/ou un alcalin réduit encore davantage la performance de ces procédés, du fait de la stabilité des émulsions : l'ajout de surfactant stabilise les émulsions de gouttelettes d'huile dans l'eau, rendant de nouveau leur séparation difficile et les procédés conventionnels inefficaces. Les composés alcalins peuvent transformer certains hydrocarbures acides en surfactants, stabilisant d'autant plus les émulsions.

Il est donc très difficile, lorsque l'effluent de production contient des polymères, et encore plus lorsqu'il contient un surfactant et/ou un alcalin, d'atteindre les spécifications des qualités d'eau attendues, quelle que soit l'option choisie (réutilisation ou rejet dans le milieu naturel).

Il est très difficile de déshuiler un effluent visqueux, ceci est un fait connu. C'est pourquoi, lorsqu'on souhaite traiter l'effluent de production comprenant des polymères et de l'huile, une solution est de procéder à une étape de dégradation des polymères contenus dans l'effluent de production, et ensuite à une étape de filtration et de récupération des huiles. L'objectif est de rendre les polymères plus petits de façon à ce qu'ils puissent traverser les médias de filtration avec les molécules d'eau.

Ainsi, la demande de brevet FR3012129 décrit un procédé de traitement d'une composition aqueuse comprenant au moins un polymère dans le cadre de la production d'hydrocarbures, et plus particulièrement dans le cadre de la récupération assistée d'hydrocarbures (en anglais « Enhanced oil recovery » ou EOR). Le procédé selon cette demande de brevet comprend une étape de mise en contact de la composition aqueuse comprenant le polymère avec au moins un agent de dégradation du polymère afin de réduire la taille du polymère, suivie d'une étape de filtration avec un filtre membranaire de la composition aqueuse obtenue à l'étape précédente pour obtenir un rétentat comprenant des hydrocarbures dispersés, des matières en suspension, et un perméat en phase aqueuse comprenant le polymère de taille réduite qui satisfait aux spécifications d'injection. L'agent de dégradation du polymère peut être un agent chimique, essentiellement un agent oxydant, ou un agent physique, ondes ultrasonores ou rayons ultra-violets.

Le problème de ce procédé est que, en commençant par une étape de dégradation, tous les composés compris dans l'effluent de production pourront également être oxydés ou dégradés physiquement. En d'autres termes, l'agent de dégradation, qu'il soit oxydant ou physique n'effectue pas de sélection entre les polymères, les surfactants, les huiles ou autres éléments, ce qui entraîne l'oxydation, plus largement la dégradation, de tous les composés organiques présents dans l'effluent de production. Par conséquent, cela nécessite d'une part une quantité importante d'oxydants ou d'agent de dégradation. Et, d'autre part, cela dégrade des composés qu'on souhaiterait au contraire valoriser, par exemple les huiles d'hydrocarbures.

L'invention vise à surmonter les inconvénients précités.

En particulier, l'invention vise à disposer d'un procédé de traitement d'un effluent aqueux comprenant au moins un polymère, généralement des effluents aqueux issus de la récupération assistée d'hydrocarbures, qui permette notamment de réduire les risques de colmatage des filtres et des membranes, de valoriser les huiles d'hydrocarbures et l'eau compris dans cet effluent, de réinjecter une eau de bonne qualité dans une formation souterraine et de générer un minimum de déchets liquides et solides.

Le procédé de traitement doit pouvoir débarrasser l'effluent aqueux des huiles, et réduire sa viscosité, voire se débarrasser des matières en suspension.

En outre, l'invention vise à utiliser le moins d'agents ou de produits chimiques dans le procédé pour répondre à ces besoins.

### EXPOSE DE L'INVENTION

A cette fin, l'invention concerne un procédé de traitement d'un effluent aqueux comprenant au moins un polymère et de l'huile, comprenant les étapes suivantes :
- une étape de déshuilage de l'effluent aqueux et
- une étape de déviscosification, réalisée à l'issue de l'étape de déshuilage.

Dans la présente description, on appellera « huiles » des produits liquides non miscibles à l'eau tels que des huiles minérales, des hydrocarbures légers, et « déshuilage » un procédé d'élimination d'huiles présentes en quantité notable dans les effluents aqueux, issus en particulier des industries du pétrole, de la fabrication de produits cosmétiques, de l'agroalimentaire.

Selon l'invention, l'effluent aqueux comprend, en plus du ou des polymère(s) et de l'huile, des matières en suspension (MES) telles que des sables, des argiles, des sels inorganiques, des produits de corrosion, et peut également comprendre des alcalins et/ou des surfactants.

La viscosité de l'effluent est en général supérieure au centipoise, voire supérieure à 1,5 centipoises, du fait de la présence de polymère(s).

Selon l'invention, les expressions « eau viscosifiée » ou « effluent viscosifié », combinés ou non avec les termes « produits » ou « de production » désignent toutes un effluent aqueux contenant un ou plusieurs polymère(s), provenant en particulier de la récupération assistée d'hydrocarbures avec ajout de polymère(s).

Selon l'invention, l'expression « déviscosifier » signifie réduire la viscosité de l'effluent aqueux.

Selon l'invention, les termes « concentrat » ou « rétentat » se réfèrent à la partie d'un fluide qui ne peut pas traverser une membrane (ou un filtre), alors que les termes « perméat » ou « filtrat » se réfèrent à la partie d'un fluide qui traverse la membrane (ou le filtre).

L'effluent aqueux désigne le fluide qui entre dans le procédé de traitement selon l'invention, le fluide intermédiaire désigne un fluide en cours de traitement et le fluide traité désigne le fluide qui sort du procédé de traitement selon l'invention. L'effluent aqueux, le fluide intermédiaire et le fluide traité ne présentent pas les mêmes éléments et/ou concentration d'éléments. De même, le fluide intermédiaire peut présenter des compositions différentes en fonction de l'avancement du procédé.

On pourra indifféremment parler de « fluide ».

Selon l'invention, on définit les termes « amont » et « aval » par rapport à la direction du fluide dans le procédé.

Par exemple, le rétentat sera la partie du fluide retenu en amont de la membrane (ou du filtre) tandis que le filtrat sera la partie du fluide qui a traversé la membrane (ou le filtre) et se situe donc en aval de ladite membrane (ou du filtre).

Selon un mode de réalisation préféré, l'étape de déshuilage comprend une étape de coalescence.

Contrairement à l'idée répandue qu'il est très difficile de déshuiler un effluent visqueux, le demandeur s'est rendu compte de façon particulièrement surprenante que la coalescence permet d'obtenir de meilleurs résultats de déshuilage sur des effluents aqueux visqueux que les solutions conventionnelles de déshuilage de type flottation, séparation gravitaire ou filtration.

La coalescence est un procédé par lequel au moins deux gouttelettes d'huile se rejoignent, formant des gouttelettes plus grandes avec la séparation finale de l'émulsion en deux phases (une phase huileuse et une phase aqueuse). La force motrice pour la coalescence des huiles est l'amincissement et la rupture du film liquide entre les gouttelettes. Lorsque les gouttelettes s'approchent les unes des autres de très près, le film liquide entre elles subit une certaine fluctuation, et lorsque l'épaisseur du film s'approche d'une valeur critique, l'effondrement du film se produit entraînant sa rupture.

La coalescence se produit lorsque les gouttelettes d'huile de l'effluent de production entrent en contact avec un contacteur de coalescence.

Le terme « contacteur de coalescence » désigne un dispositif comprenant au moins une membrane hydrophobe non dispersive dite « membrane coalescente », qui est capable de fusionner des gouttelettes d'huile à partir d'un effluent aqueux sur une surface de la membrane coalescente, de faire traverser l'huile à travers la membrane et de collecter une huile coalescée à partir de l'autre côté de ladite surface de la membrane coalescente.

Il se forme sur une surface d'une membrane du contacteur de coalescence un film continu huileux qui peut s'écouler le long de ladite surface de la membrane, et qui traverse ladite membrane. Des gouttelettes peuvent aussi traverser ladite membrane, fusionner entre elles puis être collectées.

En d'autres termes, il s'agit d'une combinaison entre la coalescence et la perméation, permise grâce à un contacteur coalescent astucieusement choisi.

Étant donné que les polymères utilisés dans la récupération assistée d'hydrocarbures par ajout de polymère sont solubles dans l'eau, ils restent dans la phase aqueuse et sont donc également séparés de l'huile après l'étape de coalescence consistant à diriger l'effluent de production vers un contacteur à coalescence membranaire.

On récupère donc du côté amont de la membrane une phase aqueuse comprenant les polymères (et des matières en suspension, voire d'autres additifs) et du côté aval de la membrane une phase huileuse comprenant des huiles « pures », c'est-à-dire des huiles qui ne sont pas mélangées à de l'eau, des MES ou d'autres produits miscibles dans l'eau.

Selon un mode de réalisation, l'étape de coalescence est mise en oeuvre au moyen d'un contacteur de coalescence comportant un lit de billes de résine oléophile. Les billes attirent les microgouttelettes d'huile présentes dans l'eau. Une fois que le film enrobant une bille atteint une épaisseur suffisante, il s'en détache sous forme d'une gouttelette qui décante.

Selon un mode de réalisation, l'effluent de production est mis en contact avec la paroi interne de la membrane de coalescence, par exemple de type membrane tubulaire ou de structure membranaire en fibres creuses et une perméation des huiles se fait de la paroi interne vers la paroi externe de la membrane.

Dans ce cas, l'huile traverse la membrane de coalescence depuis une surface intérieure vers une surface extérieure de ladite membrane. Ce mode de coalescence est dit « frontal » et « in-out » mais il est très sensible aux matières en suspension qui restent confinées à l'intérieur de la membrane tubulaire ou de la structure membranaire en fibres creuses. Ce mode est sensible au bouchage des pores de la membrane tubulaire ou des fibres creuses et peut donc être moins adapté pour récupérer l'huile provenant de l'effluent produit.

Selon un mode de réalisation préférentiel, la coalescence est exécutée dans une configuration de passage « tangentiel » et « out-in », ce qui signifie que l'effluent de production est mis en contact avec la paroi externe d'une membrane, par exemple une membrane tubulaire ou d'une structure membranaire en fibres creuses et tangentiellement le long de la paroi externe de la membrane. Cette circulation tangentielle du fluide permet de limiter l'accumulation des particules. Ainsi les risques de colmatage des pores et/ou fibres de la membrane sont réduits.

Ainsi les risques de colmatage des pores de la membrane tubulaire ou des fibres creuses sont réduits. En effet, la coalescence de l'huile se produit sur ladite paroi externe, puis une perméation de l'huile se produit de l'extérieur vers l'intérieur de la membrane. L'huile coalescée est récupérée à l'intérieur de ladite membrane.

L'étape de déshuilage par coalescence est particulièrement adaptée lorsque la concentration de MES de l'effluent aqueux est faible, par exemple une concentration maximale de MES de l'ordre de 1% en fraction massique, ou lorsqu'il n'y a pas de nécessité de les retirer.

Elle fonctionne d'autant mieux que la concentration en huiles dans l'effluent aqueux est forte.

Selon un mode de réalisation alternatif ou complémentaire, l'étape de déshuilage comprend une étape de centrifugation.

L'étape de déshuilage par centrifugation est particulièrement adaptée si la concentration en MES de l'effluent aqueux est forte et qu'il y a nécessité de les enlever. Cela correspond à une concentration minimale de MES de l'ordre de 1% en fraction massique.

Elle permet en outre d'obtenir de meilleurs résultats de déshuilage sur des effluents aqueux visqueux que les solutions conventionnelles de déshuilage de type flottation, séparation gravitaire ou filtration.

Selon un mode de réalisation, l'étape de centrifugation est une étape de centrifugation triphasique. Ainsi, on obtient trois phases:
- une phase huileuse ;
- une phase comprenant des boues formées par des MES concentrées (en majorité) ;
- une phase aqueuse : eau + polymère (+ alcali surfactant).

Ce mode de réalisation est avantageux car il ne met en oeuvre qu'un équipement, en une seule étape.

Il peut mettre en oeuvre par exemple une centrifugeuse triphasique, par exemple.

Selon un mode de réalisation alternatif, l'étape de centrifugation comprend deux sous-étapes de centrifugation biphasique :
- une première sous-étape de centrifugation biphasique apte à séparer les matières en suspension de l'effluent aqueux ou du fluide intermédiaire issu de la seconde sous-étape ;
- une seconde sous-étape de centrifugation biphasique apte à séparer les huiles de l'effluent aqueux ou du fluide intermédiaire issu de la première sous-étape.

L'ordre des sous-étapes est indifférent, la première sous-étape pouvant être réalisée après la seconde sous-étape.

Ce mode de réalisation peut mettre en oeuvre deux centrifugeuses.

Ce mode de réalisation peut mettre en oeuvre deux hydrocyclones. On peut parler d'hydrocyclone « désableur » pour les matières en suspension et d'hydrocyclone « déshuileur » pour les huiles.

Les hydrocyclones sont contrôlés par la pression du fluide en entrée et utilisent une chute de pression à travers l'hydrocyclone pour fournir l'énergie ou la force d'entraînement et provoquer la séparation huile-fluide ou MES-fluide.

On peut combiner les deux modes, à savoir une centrifugeuse associée avec un hydrocyclone.

En éliminant l'huile préalablement à l'étape de déviscosification, que ce soit par coalescence ou par centrifugation, on évite d'une part la destruction de l'huile et on peut envisager sa valorisation.

Et d'autre part, cela permet soit de réduire fortement la consommation en agent de dégradation des polymères, soit de réduire la durée de l'étape de déviscosification selon le mode choisi pour déviscosifier le fluide intermédiaire.

Selon un mode de réalisation préféré, l'étape de déviscosification comprend une étape de dégradation des polymères.

L'étape de dégradation des polymères vise à dégrader les polymères en cassant des liaisons de manière à générer des molécules plus petites. Cela permet de diminuer la viscosité de du fluide intermédiaire issu de l'étape de déshuilage.

Selon un mode de réalisation, l'étape de dégradation des polymères comprend une étape d'oxydation.

Comme l'huile a été préalablement éliminée lors de l'étape de déshuilage, de préférence par coalescence ou par centrifugation, on réduit fortement la consommation de l'oxydant mis en oeuvre. En effet, en présence d'huile, les oxydants n'ont pas un effet sélectif entre les polymères, les surfactants et l'huile.

Selon un mode de réalisation particulier, l'étape d'oxydation est réalisée en utilisant de l'ozone (O₃).

Cette étape peut comprendre une étape préliminaire de génération d'ozone à partir d'O₂ ou d'air, au moyen d'un générateur d'ozone par exemple. Ce mode permet de ne pas avoir à apporter des produits, l'ozone pouvant être fabriquée sur place avec l'air ambiant.

Selon un mode de réalisation particulier, l'étape d'oxydation est réalisée en utilisant de l'ozone (O₃) associé avec un catalyseur.

Selon un mode de réalisation particulier, l'étape d'oxydation est réalisée en utilisant du peroxyde d'hydrogène (H₂O₂).

Selon un mode de réalisation particulier, l'étape d'oxydation est réalisée en utilisant du peroxyde d'hydrogène (H₂O₂) associé avec un catalyseur métallique.

Selon un mode de réalisation, les produits d'oxydation des polymères et/ou les produits chimiques de dégradation des polymères peuvent être injectés dans le fluide intermédiaire issu de l'étape de déshuilage, soit dans un circuit, soit dans un réservoir contenant ledit fluide intermédiaire.

Selon un mode de réalisation particulier, l'étape de dégradation des polymères comprend une étape d'électro-oxydation. Les radicaux libres générés par électro-oxydation agissent sur les polymères pour les dégrader.

Selon un mode de réalisation particulier, l'étape de dégradation des polymères comprend une étape de traitement par des ultraviolets, qui agissent sur les polymères afin de les dégrader.

Selon un mode de réalisation particulier, l'étape de dégradation des polymères comprend une étape de dégradation mécanique en appliquant une force de cisaillement au fluide intermédiaire issu de l'étape de déshuilage.

Cette étape peut être réalisée en appliquant une pression audit fluide intermédiaire et en le faisant passer par une pompe centrifuge.

Alternativement, cette étape peut être réalisée en appliquant une pression audit fluide intermédiaire et en le faisant passer à travers une vanne, par exemple une vanne à boisseau ou une vanne pointeau.

En éliminant l'huile préalablement à l'étape de déviscosification dudit fluide intermédiaire, on évite l'émulsification des huiles lors de cette étape de dégradation mécanique.

Lorsque l'étape de déviscosification est réalisée par des moyens de dégradation des polymères qui agissent sur la rupture de la chaîne du polymère pour réduire la viscosité de l'eau produite, les polymères ne sont pas réutilisables.

Selon un mode de réalisation alternatif, l'étape de déviscosification comprend une étape de séparation des polymères par ultrafiltration ou microfiltration membranaire.

Alternativement aux moyens de dégradation, ce mode de réalisation permet de ne pas dégrader les polymères et de les réutiliser.

L'ultrafiltration est un procédé à membrane à basse pression conçu pour éliminer les particules dans la gamme de taille de 0,002 µm à 0,2 µm. La microfiltration est un procédé à membrane à basse pression conçu pour éliminer les particules dans la gamme de taille de 0,02 µm à 2 µm.

Les membranes en céramique sont avantageusement choisies pour leurs caractéristiques spécifiques :
- capacité à gérer un flux d'eau élevé
- résistance aux hautes températures
- haute résistance chimique
- insensibilité aux oxydants

La membrane céramique peut comprendre du carbure de silicium (SiC), du dioxyde de titane (TiO₂), du dioxyde de zirconium (ZrO₂), de l'oxyde d'aluminium (Al₂O₃) ou un mélange de ces céramiques.

La configuration préférée est une ou plusieurs membranes d'ultrafiltration ou de microfiltration de type tubulaire ou multicanaux, particulièrement adaptées au domaine de l'invention.

La filtration peut s'effectuer depuis l'intérieur vers l'extérieur de la membrane tubulaire ou multicanaux, ce qui entraîne une concentration des gouttelettes d'huiles s'il en reste, des matières en suspension et des polymères à l'intérieur de ladite membrane. Une vitesse tangentielle du fluide s'écoulant à l'intérieur de la membrane tubulaire ou multicanaux peut être appliquée le long et à l'intérieur de la membrane afin de limiter l'encrassement.

La plupart des matières en suspension (les matières dont les particules sont plus grandes que les pores de la membrane), les gouttelettes d'huile s'il en reste et les polymères sont conservés sur la membrane (rétentat), tandis que l'eau, ainsi que des particules plus petites que les pores de la membrane et des solides dissous traversent la membrane (perméat).

En choisissant des diamètres de pores adaptés, cela peut permettre de garantir qu'aucune particule au-dessus d'un certain diamètre moyen, par exemple 1 µm ne soit réinjectée avec l'eau traitée dans le réservoir d'hydrocarbures. Ainsi cela peut permettre d'éviter l'étape d'affinage.

Le fluide intermédiaire issu de l'étape de déshuilage est passé à travers la membrane.

Le rétentat comprend les polymères et les matières en suspension. Le perméat comprend la phase aqueuse.

Lorsque l'étape de déviscosification est réalisée par séparation des polymères du fluide intermédiaire issu de l'étape de déshuilage, les polymères peuvent être réutilisables.

Selon un mode de réalisation, le procédé comprend une étape de désémulsification préalable à l'étape de déshuilage.

Les surfactants et/ou les alcalins augmentent l'émulsification de l'huile, ce qui rend leur séparation avec l'effluent aqueux plus difficile. C'est pourquoi il est avantageux de désémulsifier l'effluent aqueux avant l'étape de déshuilage.

L'étape de désémulsification consiste en l'ajout de désémulsifiants dans l'effluent.

L'étape de désémulsification peut comprendre en outre une étape de neutralisation des éléments alcalins, par exemple par un acide.

Selon un mode de réalisation, le procédé comprend une étape de filtration physique pour séparer le fluide intermédiaire et les MES. Cette étape est préférentiellement réalisée après l'étape de déviscosification.

Dans cette étape, on peut utiliser des filtres du type « nutshell » qui sont des systèmes dont les médias sont des filtres à base de coques de fruits secs tels des noix, noix de pécan, qui résistent mieux au colmatage que les autres médias, ou des filtres à sable ou tout autre filtre adapté pour extraire les MES.

Cette étape est préférée lorsque l'étape de déshuilage est réalisée par coalescence. En effet, ce mode de réalisation de déshuilage ne permet pas d'enlever les MES de l'effluent aqueux.

Selon un mode de réalisation, le procédé comprend une étape d'affinage.

Cette étape est préférentiellement réalisée après l'étape de déviscosification ou après l'étape de filtration physique si elle est mise en oeuvre, et elle est réalisée dans le cas où le fluide intermédiaire issu de l'étape de déviscosifiation ou de l'étape de séparation physique contient encore des matières en suspension.

Cette étape a pour objectif de contrôler la granulométrie des matières en suspension.

L'étape d'affinage peut être réalisée au moyen d'un ou de plusieurs filtre(s) à cartouches. Les plus petites particules resteront dans l'eau traitée et les plus grosses particules seront capturées dans les cartouches.

Cela permet de garantir qu'aucune particule au-dessus d'un certain diamètre moyen, par exemple 10 µm ne soit réinjectée avec l'eau traitée dans le réservoir d'hydrocarbures.

Lorsque la perte de charge à travers les filtres à cartouches atteint une limite maximale prédéfinie d'environ 1,5 bar, les cartouches sont remplacées.

L'étape d'affinage est particulièrement avantageuse lorsque l'étape de déviscosification n'est pas réalisée par ultrafiltration ou microfiltration membranaire. En effet, lors d'une étape d'ultrafiltration ou microfiltration membranaire, par définition les particules dont les diamètres moyens sont supérieurs à 2 µm ont déjà été retenues par la membrane d'ultrafiltration ou de microfiltration.

Il est à noter que la présente invention n'exclut pas les modes de réalisation dans lesquels il existe au moins une étape supplémentaire entre les différentes étapes.

Un autre objet de l'invention est un dispositif de traitement d'un effluent aqueux comprenant au moins un polymère et de l'huile, comprenant:
- des moyens de déshuilage et
- des moyens de déviscosification disposés en aval des moyens de déshuilage.

Selon un mode de réalisation, les moyens de déshuilage comprennent un contacteur de coalescence comprenant au moins une membrane de coalescence.

Selon un mode de réalisation, une membrane de coalescence est une membrane tubulaire.

Selon un mode de réalisation, une membrane coalescente est une structure membranaire en fibres creuses.

Selon un mode de réalisation, une membrane coalescente est une membrane microporeuse.

Selon un mode de réalisation, une membrane coalescente est sous la forme d'une feuille ou d'une plaque poreuse.

Selon un mode de réalisation, une membrane comprend un matériau choisi parmi le polyéthylène, le polypropylène, les polyoléfines, le polychlorure de vinyle (PVC), le polyéthylène téréphtalate amorphe (PET), les copolymères de polyoléfine, les polymères de type poly(etherethercetone), les PTFE ou leurs combinaisons.

Selon un mode de réalisation, un contacteur de coalescence peut comprendre plusieurs membranes coalescentes ou un ou plusieurs modules comprenant plusieurs membranes coalescentes.

Selon un mode de réalisation, les moyens de déshuilage comprennent une centrifugeuse triphasique.

Selon un mode de réalisation, les moyens de déshuilage comprennent au moins un hydrocyclone.

Selon un mode de réalisation, les moyens de déshuilage comprennent au moins une centrifugeuse biphasique.

Selon un mode de réalisation, les moyens de déviscosification comprennent des moyens de dégradation du polymère.

Selon un mode de réalisation, les moyens de dégradation du polymère comprennent des moyens d'oxydation, de préférence des moyens d'ozonation.

Selon un mode de réalisation, les moyens d'ozonation comprennent un générateur d'ozone.

Selon un mode de réalisation, les moyens d'ozonation comprennent des moyens d'injection de l'ozone dans le fluide intermédiaire issu de l'étape de déshuilage.

Selon un mode de réalisation, les moyens d'injection comprennent des buses, aptes à être immergées dans le fluide intermédiaire issu de l'étape de déshuilage.

Selon un mode de réalisation, les moyens de déviscosification comprennent au moins une membrane d'ultrafiltration ou de microfiltration.

Selon un mode de réalisation au moins une membrane d'ultrafiltration ou de microfiltration est une membrane céramique.

Selon un mode de réalisation au moins une membrane est de type tubulaire.

Selon un mode de réalisation au moins une membrane est de type multicanaux.

Selon un mode de réalisation, au moins une membrane d'ultrafiltration ou de microfiltration céramique comprend du carbure de silicium (SiC), du dioxyde de titane (TiO2), du dioxyde de zirconium (ZrO2), de l'oxyde d'aluminium (Al2O3) ou un mélange de ces céramiques.

Selon un mode de réalisation, le dispositif comprend en outre des moyens de filtration physique aptes à séparer le fluide intermédiaire issu de l'étape de déviscosification et les matières en suspension, lesdits moyens de filtration physique étant disposés en aval des moyens de déviscosification.

Selon un mode de réalisation, les moyens de filtration physique comprennent des filtres à base de coques de fruits secs et/ou des filtres à sable.

Selon un mode de réalisation, le dispositif comprend en outre des moyens d'affinage disposés en aval des moyens de déviscosification ou des moyens de filtration physique, et aptes à retenir des particules dont le diamètre moyen est supérieur à une valeur donnée.

Selon un mode de réalisation, les moyens d'affinage comprennent au moins un filtre à cartouches apte à retenir des particules dont le diamètre moyen est supérieur à une valeur donnée.

### DESCRIPTION DES FIGURES

D'autres caractéristiques et avantages de l'invention apparaîtront à l'aide de la description qui suit donnée à titre illustratif et non limitatif, faite en regard des figures annexées parmi lesquelles
- la figure 1 illustre un premier mode de réalisation du procédé selon l'invention ;
- la figure 2 illustre un second mode de réalisation du procédé selon l'invention ;
- la figure 3 illustre un troisième mode de réalisation du procédé selon l'invention ;
- la figure 4 illustre un quatrième mode de réalisation du procédé selon l'invention.

### EXPOSÉ DÉTAILLÉ DES MODES DE RÉALISATION PARTICULIERS ET MODE DE REALISATION PREFERE

Le procédé de traitement vise à débarrasser l'eau des huiles, à réduire sa viscosité, à se débarrasser si nécessaire des matières en suspension (MES) lorsqu'elles sont en quantité importante et des surfactants et/ou alcalins lorsqu'ils ont été ajoutés dans le fluide de balayage. Typiquement, les effluents aqueux produits à traiter peuvent contenir:
- des huiles : de quelques centaines à quelques milliers de mg/L
- un ou des polymère(s) : de 100 mg/L à 2000 mg/L, générant une viscosité de 1,5 à 15 cP
- des matières en suspension : de quelques traces à quelques milliers de mg/L
- un ou des surfactant(s) : de 0,1 à 1% massique (facultatif)
- un ou des composé(s) alcalin(s) : de 1 à 5% massique (facultatif)

Dans les figures :
- E désigne l'effluent (Effluent en anglais)
- O désigne les huiles (Oil en anglais)
- W désigne l'eau (Water) ou une solution aqueuse
- TSS désigne les matières en suspension (Total Suspended Solids)
- P désigne les polymères non dégradés
- p désigne les polymères dégradés
- A désigne les alcalins
- S désigne les surfactants
- 10 désigne le réservoir d'hydrocarbures
- 20 désigne le milieu de rejet de l'eau traitée
- 100 désigne l'étape de désémulsification et de neutralisation
- 210 désigne l'étape de déshuilage par coalescence
- 220 désigne l'étape de déshuilage par centrifugation
- 310 désigne l'étape de déviscosification par dégradation du polymère
- 320 désigne l'étape de déviscosification par ultrafiltration ultrafiltration ou microfiltration membranaire
- 400 désigne l'étape de filtration physique.

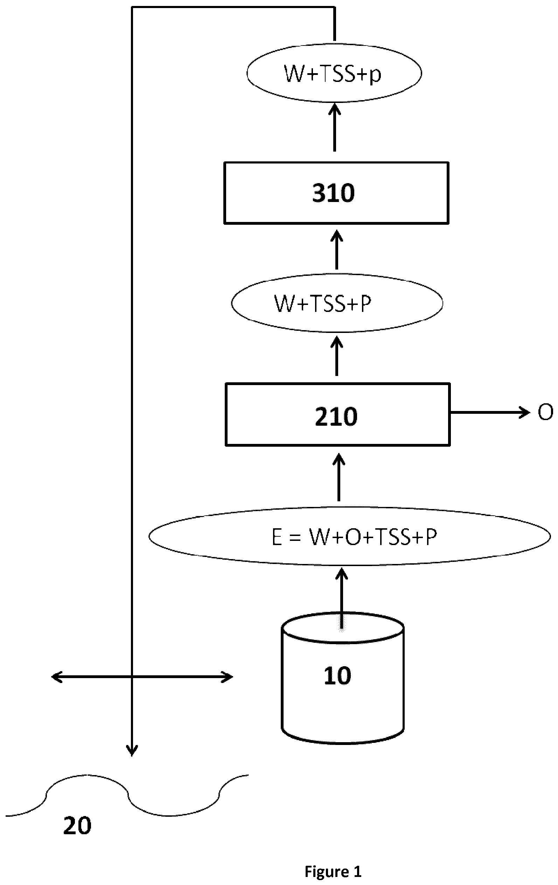

Pour l'ensemble des figures 1 à 4, l'effluent aqueux E est issu de la récupération assistée d'hydrocarbures dans le réservoir 10.

Le fluide traité (l'eau W ou une solution aqueuse W+TSS+p ou W+TSS) issu du procédé de traitement peut être :
- soit réinjecté dans le réservoir 10 de manière à récupérer de nouveau des hydrocarbures;
- soit rejetée dans un milieu 20 qui peut être la mer, un fleuve, un bassin.

Le procédé en figure 1 illustre un premier mode de réalisation du procédé, qui est aussi le mode préféré.

Selon ce mode, le procédé de traitement comprend une étape de coalescence 210, comme étape de déshuilage. L'huile O est extraite de l'effluent aqueux, et peut être récupérée et valorisée.

Le procédé de traitement comprend, à la suite de l'étape de coalescence 210, une étape de dégradation 310 des polymères P, comme étape de déviscosification. L'étape de dégradation 310 génère des polymères dégradés p.

L'étape de dégradation 310 peut être réalisée par oxydation, ou par des moyens physiques ou mécaniques, ou par d'autres agents chimiques. Elle peut mettre en oeuvre l'un des moyens indiqués dans le tableau 1 ci-dessus, ou une combinaison de moyens comme indiqué dans le tableau 1.

**Tableau 1**

| | |
|---|---|
| NaClO | Oxydation |
| ClO2 | Oxydation |
| UV (10 W) | Physique |
| H2O2 | Oxydation |
| 03 | Oxydation |
| 03 + H2O2 | Oxydation |
| UV + 03 | Oxydation + physique |
| UV + H2O2 | Oxydation + physique |
| UV + TiO2 (PECO) | Oxydation + physique |
| UV + TiO2 + Fe | Oxydation + physique |
| UV + H2O2 + 03 | Oxydation + physique |
| Fenton (H2O2 + Fe) | Oxydation |
| H2O2 + Fe(III)-SiO2 (id Fenton) | Oxydation |
| H2O2 + Fe(III)-Al (id Fenton) | Oxydation |
| H2O2 + Fe(III) w Cu-AI (id Fenton) | Oxydation |
| UV + Fenton | Oxydation + physique |
| Lumière visible + Fenton | Oxydation + physique |
| Lumière visible+ Fenton + C₂O₄²⁻ | Oxydation + physique |
| UV + Fenton + C₂O₄²⁻ | Oxydation + physique |
| Lumière visible+ Fenton + C₄H₄O₆²⁻ | Oxydation + physique |
| Electrode diamant dopé bore + Fe + UV | Oxydation + physique |
| Dégradation mécanique | Mécanique |
| Dégradation chimique | Chimique (sauf oxydation) |

Les produits d'oxydation et/ou les produits chimiques de dégradation des polymères peuvent être injectés dans le fluide intermédiaire issu de l'étape de déshuilage, soit dans un circuit apte à contenir ledit fluide intermédiaire, par exemple une tuyauterie, soit dans un réservoir apte à contenir ledit fluide intermédiaire, par exemple un bassin.

Dans le cas d'un réservoir, les produits d'oxydation et/ou les produits chimiques de dégradation des polymères peuvent être injectés via des buses aptes à être immergées dans ledit fluide intermédiaire, et à les faire buller.

Lorsque l'étape de dégradation 310 est réalisée par oxydation, elle peut être avantageusement réalisée par ozonation. L'ozone peut en effet être fabriqué sur place avec l'air ambiant, ou avec de l'oxygène. La production d'ozone se fait par une décharge électrique de l'oxygène, par exemple d'oxygène de l'air, grâce à des générateurs d'ozone.

Lorsque l'étape de dégradation 310 est réalisée par des moyens mécaniques, en appliquant une force de cisaillement à un fluide, elle peut être réalisée en appliquant une pression au fluide intermédiaire issu de l'étape de déshuilage et en le faisant passer par une pompe, par exemple une pompe centrifuge. Par exemple, ledit fluide intermédiaire peut être acheminé d'un réservoir à un autre en passant par un circuit pressurisé et par une pompe centrifuge.

Alternativement, cette étape peut être réalisée en appliquant une pression au fluide intermédiaire issu de l'étape de déshuilage et en le faisant passer à travers une vanne, par exemple une vanne à boisseau ou une vanne pointeau. Par exemple, ledit fluide intermédiaire peut être acheminé d'un réservoir à un autre en passant par un circuit pressurisé et par une vanne.

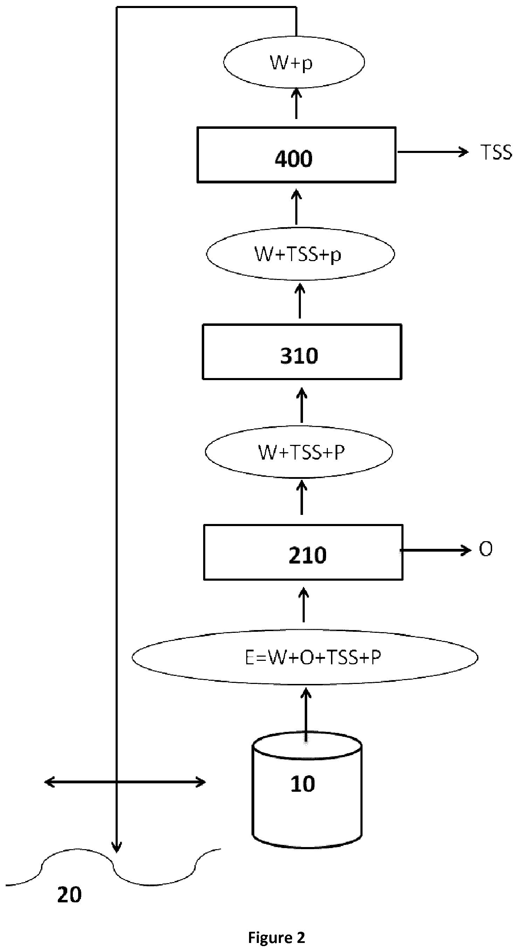

Le procédé en figure 2 illustre un second mode de réalisation du procédé.

Le procédé est le même que dans le mode de la figure 1, à ceci près qu'une étape de filtration physique 400 suit l'étape de dégradation des polymères 310, de manière à extraire des MES du fluide intermédiaire aqueux issu de l'étape déviscosification.

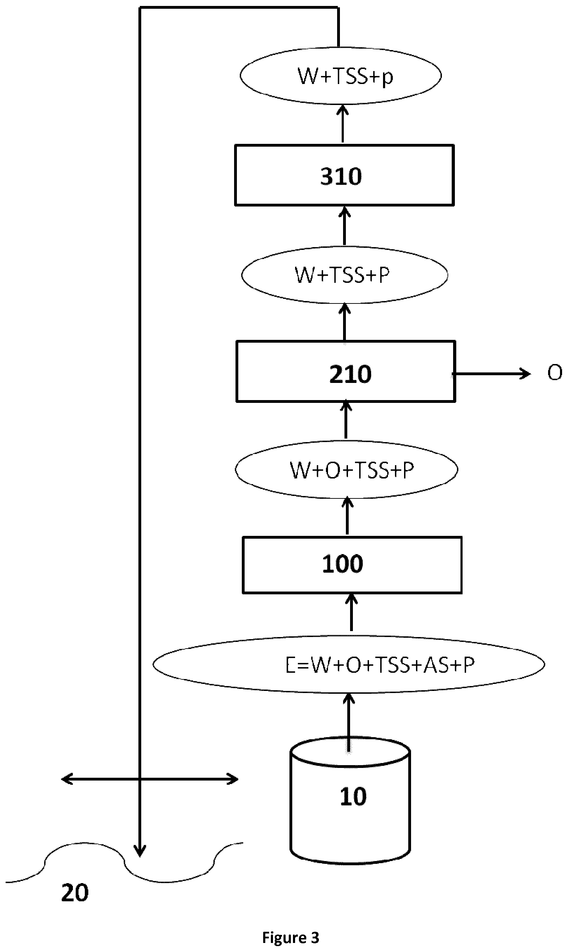

Le procédé en figure 3 illustre un troisième mode de réalisation du procédé.

Le procédé est le même que dans le mode de la figure 1, à ceci près qu'il est ajouté une étape de désémulsification 100 préalable à l'étape de coalescence 210, de manière à neutraliser les surfactants S et/ou les alcalins A.

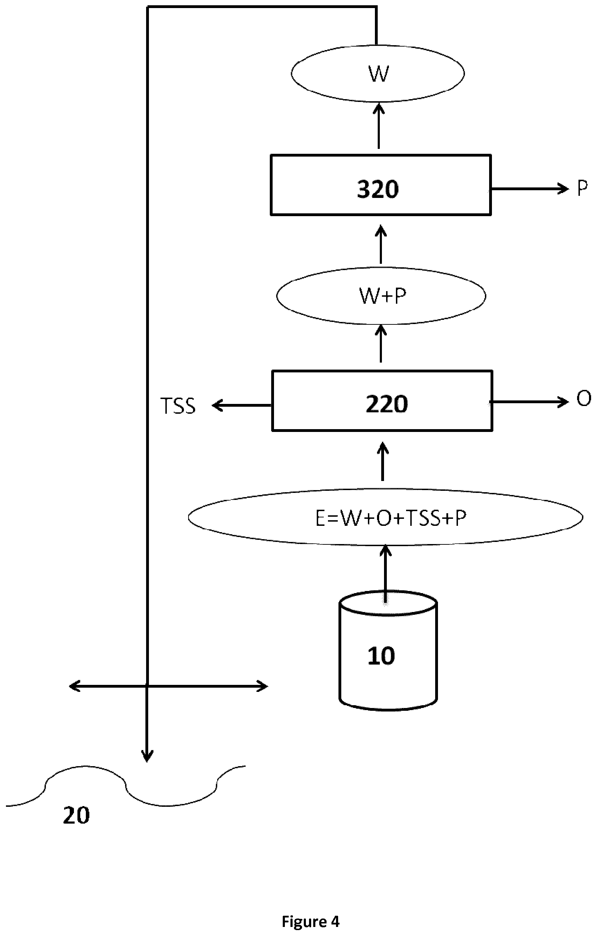

Le procédé en figure 4 illustre un quatrième mode de réalisation du procédé.

Le procédé diffère des modes précédents en ce que l'étape de déshuilage est réalisée par centrifugation 220 et est suivie d'une étape de déviscosification réalisée par ultrafiltration ou microfiltration 320.

Alternativement l'étape de déshuilage réalisée par centrifugation 220 peut être combinée avec une étape de déviscosification réalisée par dégradation 310 des polymères P.

Alternativement, une étape de déshuilage réalisée par coalescence 210 peut être combinée avec une étape de déviscosification réalisée par ultrafiltration ou microfiltration 320.

Les différents modes présentés peuvent être combinés entre eux.

Ainsi, en fonction des modes de réalisation choisis, et de la qualité de l'effluent aqueux en entrée, on atteint en sortie de traitement les valeurs suivantes sur le fluide traité :
- Huile: de <1 mg/l à 50 mg/L
- MES: de < 1 mg/L à 30 mg/L avec des tailles de particules comprises entre 0,01 à 10 µm lorsque l'objectif est de réinjecter l'eau dans les puits ou les réservoirs d'hydrocarbure pour les récupérer.
- Diminution de la viscosité à une valeur comprise entre 1 et 1,5 cP

La présente invention n'est pas limitée aux modes de réalisation précédemment décrits mais s'étend à tout mode de réalisation entrant dans la portée des revendications.

## Revendications

1. Procédé de traitement d'un effluent aqueux comprenant au moins un polymère et de l'huile, comprenant les étapes suivantes :
- une étape de déshuilage (210 ; 220) de l'effluent aqueux et
- une étape de déviscosification (310 ; 320), réalisée à l'issue de l'étape de déshuilage.

2. Procédé de traitement selon la revendication 1, l'étape de déshuilage comprenant une étape de coalescence (210).

3. Procédé de traitement selon l'une des revendications 1 ou 2, l'étape de déshuilage comprenant une étape de centrifugation (220).

4. Procédé de traitement selon la revendication 3, l'étape de centrifugation étant une étape de centrifugation triphasique.

5. Procédé de traitement selon la revendication 3, l'étape de centrifugation comprenant deux sous-étapes de centrifugation biphasique.

6. Procédé de traitement selon l'une des revendications 1 à 5, l'étape de déviscosification comprenant une étape de dégradation des polymères (310).

7. Procédé de traitement selon la revendication 6, l'étape de dégradation des polymères comprenant une étape d'oxydation.

8. Procédé de traitement selon la revendication 7, l'étape d'oxydation comprenant une étape d'ozonation.

9. Procédé de traitement selon la revendication 6, l'étape de dégradation des polymères comprenant une étape d'électro-oxydation.

10. Procédé de traitement selon la revendication 6, l'étape de dégradation des polymères comprenant une étape de traitement par des ultraviolets.

11. Procédé de traitement selon la revendication 6, l'étape de dégradation des polymères comprenant une étape de dégradation mécanique, en appliquant une force de cisaillement au fluide intermédiaire issu de l'étape de déshuilage.

12. Procédé de traitement selon l'une des revendications 1 à 5, l'étape de déviscosification comprenant une étape de séparation des polymères par ultrafiltration ou microfiltration membranaire (320).

13. Procédé de traitement selon l'une des revendications 1 à 12 comprenant en outre une étape de désémulsification (100) de l'effluent aqueux préalable à l'étape de déshuilage.

14. Procédé de traitement selon l'une des revendications 1 à 13 comprenant en outre une étape de neutralisation des éléments alcalins préalable à l'étape de déshuilage.

15. Dispositif de traitement d'un effluent aqueux comprenant au moins un polymère et de l'huile, comprenant :
- des moyens de déshuilage et
- des moyens de déviscosification disposés en aval des moyens de déshuilage.

16. Dispositif de traitement selon la revendication 15, les moyens de déshuilage comprenant un contacteur de coalescence comprenant au moins une membrane de coalescence.

17. Dispositif de traitement selon la revendication 15, les moyens de déshuilage comprenant une centrifugeuse triphasique.

18. Dispositif de traitement selon la revendication 15, les moyens de déshuilage comprenant au moins un hydrocyclone.

19. Dispositif de traitement selon l'une des revendications 15 ou 18, les moyens de déshuilage comprenant au moins une centrifugeuse biphasique.

20. Dispositif de traitement selon l'une des revendications 15 à 19, les moyens de déviscosification comprenant des moyens de dégradation du polymère.

21. Dispositif de traitement selon la revendication 20, les moyens de dégradation du polymère comprenant des moyens d'oxydation, de préférence d'ozonation.

22. Dispositif de traitement selon l'une des revendications 15 à 19, les moyens de déviscosification comprenant au moins une membrane d'ultrafiltration ou de microfiltration.
